**Europäisches Patentamt**

**European Patent Office**

**Office européen des brevets**

(11) Publication number: **0 188 755**

**B1**

(12) **EUROPEAN PATENT SPECIFICATION**

(45) Date of publication of patent specification: **12.12.90**

(21) Application number: **85116045.7**

(22) Date of filing: **16.12.85**

(51) Int. Cl.⁵: **B 29 D 30/06,** B 29 C 33/30, B 30 B 15/00 // B29L30/00

(54) **Double mould vulcanizing press.**

(30) Priority: **21.12.84 IT 2422084**

(43) Date of publication of application:
**30.07.86 Bulletin 86/31**

(45) Publication of the grant of the patent:
**12.12.90 Bulletin 90/50**

(84) Designated Contracting States:
**DE FR GB**

(56) References cited:
**DE-A-1 777 088**
**US-A-1 582 900**
**US-A-1 666 649**
**US-A-3 734 656**
**US-A-4 548 564**

(73) Proprietor: **PIRELLI COORDINAMENTO PNEUMATICI Società per Azioni Piazzale Cadorna, 5 I-20123 Milan (IT)**

(72) Inventor: **Pizzorno, Augusto Via F. Chopin, 31 Milan (IT)**

(74) Representative: **Giannesi, Pier Giovanni et al Pirelli S.p.A. Direzione Brevetti Piazzale Cadorna, 5 I-20123 Milano (IT)**

Courier Press, Leamington Spa, England.

## Description

The present invention concerns devices for moulding as well as for injecting, and also for vulcanizing elastomeric or plastomeric articles. In particular, it refers to the vulcanizing presses that are provided with double-moulds, according to the preamble of claim 1 and disclosed in US—A—3734 656.

As "presses with double-moulds" the invention refers to those presses provided with two moulds, positioned side by side on the machine frame, with their axes in parallel relationship.

One type of the presses of the invention that is by now well-known, is the one used in rubber technology, and in particular in tyre technology, which is being widely used since it offers certain undoubted advantages as with respect to those presses provided with a single-mould. In fact, with respect to these latter, the two-mould press has a double productivity, while the overall dimensions of the machine, its weight and its actioning, are not equal to twice that of the single-mould presses, so much so that further economic advantages are had as far as regards the cost, and the consequent blocking of capital. Further savings can also be had during exercise, with regard to the usage of fluids and of energy in general, that are necessary for making the press function.

With respect to the single-mould presses, the double-mould presses however present a disadvantage that has a negative effect on the quality of the finished product, which disadvantage has now become intolerable as a consequence of the high qualitative level obtained through the other systems and which seriously affect the actual possibilities of further developing these machines.

The general architecture of a double-mould press, as clearly explained for example in the US—A—3.734.656 to Herbert, is easily recalled to mind. It consists of a frame comprising a base on which the two moulds are arranged, a beam to which are connected the upper portions of the said two moulds and two shoulders that connect the extremities of the beam to the base by means of a kinetic connection (generally of the connecting rod-handle type) that allows for shifting the beam with respect to the base — for thus opening and shutting the moulds, for so inserting the article to be moulded and vulcanized, and/or for removing the already moulded and vulcanized article. Moreover, this connection allows for keeping these moulds shut, during the moulding and vulcanizing cycle.

As is already known, during the moulding and vulcanizing of any hollow articles — such as, in particular, tyres or injected articles, on the inside of the mould there acts a vulcanizing-fluid pressure that is specially introduced into said moulds — or more precisely, in the article to be vulcanized, or the injection pressure of the material from which the article to be moulded is comprised.

This pressure tends to open the moulds — and hence, it must be opposed even before the entry of the fluid or the injected material into the mould, with a thrust exercised by the beam upon one portion of the mould against the other portion of said mould.

Now, if one were to consider that the beam is fixed at its extremities to the shoulders, and that, on said extremities, the thrust is applied for shutting the moulds, while the moulds exercise a pressure, in the contrary sense, in two intermediate points of the beam — then it can immediately be guessed that the beam bends more or less symmetrically, with respect to its mid-plane that is situated between the two points of application, for the counter-pressure of the moulds.

Owing to this flexion of the beam — and hence, of the consequent variation in the geometry of the machine, the two moulds — that have one portion made integral with the beam and the other portion made integral with the base of the press, present the two corresponding portions off-set one with respect to the other — and hence, they result as being non-symmetrically loaded with regard to their axis and, at times, they do not even keep completely shut, but each one tends to open-up in the zone overlooking the other mould.

This phenomenon causes an unsymmetrical moulding of the product and the formation of burrs that are more or less evident along a limited portion of the peripheral contour of the product and which compromise both, its aspect, as well as its qualitative standard.

It is evident that, in the single-mould presses, the eventual bending of the beam however, is always cantered in respect of the axis of the mould, which is why said machines are devoid of the above-described drawback.

The aim of the present invention is to bring about certain improvements in the architecture of these double-mould presses, provided with two adjacent places for containing two corresponding vulcanizing moulds, each mould comprising at least two opposite sections, a lower and an upper section respectively, that are reciprocally shiftable axially in both directions, with delimiting a cavity inside which the product is moulded and vulcanized, with each section being mounted on a corresponding table, said press being constituted substantially by a frame comprising a base, provided with two adjacent, side by side placed housing seats for the lower tables, a beam to which the upper tables are fixed, two shoulders connecting said beam to said base through fixtures that allow for shifting said beam with respect to said base for so realising at least the opening and the shutting of the moulds and for exercising a thrust, upon each pair of opposed sections, that is sufficient for keeping the said moulds shut, by contrasting the pressure acting inside said moulds during each working cycle; with said improvements it will be possible to eliminate the above-said defects and to raise these machines to a competitive level with respect to the other machines and, in this manner, to render once again available the undoubted advantages, previously cited, that they present.

Therefore, what constitutes the object of the present invention is a moulding and/or vulcanizing press, as above described, that is characterised by the fact of comprising means for coupling with said moulds, that are made integral with said beam and said base and interposed respectively between said beam and said upper table and between said base and said lower table, provided with coupling surfaces with corresponding matching surfaces made on said tables, apt for allowing, for each mould, relative shiftings between said closed and pressurised mould and said frame.

In particular, said relative shiftings comprise at least the rotation of each table, with respect to the frame, about an axis perpendicular to the axis of said mould and to the plane of symmetry of the press that passes through said shoulders.

Again, the said coupling surfaces are preferably concave surfaces whose intersections, with said plane of symmetry, are arcs of a circle having the line perpendicular to the cord, inclined with respect to the axis of the mould, according to an angle comprised between 20° and 40°.

Preferably, in correspondence of each table, the said supporting means comprise a pair of longitudinal members mounted integrally with respect to each said table and said base, perpendicularly to said plane of symmetry, symmetrically disposed with respect to the axis of said mould, provided with a concave surface for coupling with a corresponding convex surface made on said table. In particular, said concave surface is preferably a cylindrical surface, having its generatrix parallel to the longitudinal direction of said longitudinal member: according to a preferred form of execution, the intersection of said cylindrical surfaces, made on each pair of longitudinal members in correspondence of the half-moulds, with the said plane of symmetry, is constituted by two arcs of a circle forming part of the same circumference. The circumferences respectively below and above relative to a single-mould, have preferably the same center — but they do not obligatorily have the same radius.

In a further convenient alternative variation of execution of the said machine of the invention, said coupling means comprise, for each table, a drum — coaxial with said annular section, provided with a concave surface, constituting the inner surface of a spherical cap, that couples with a corresponding convex spherical cap made on said table.

In any case, the present invention will be better understood with the aid of the following description and the attached figures given solely by way of non-limiting example, wherein:-

FIG. 1 — shows a general view of the press assembly for vulcanizing tyres, according to the invention.

FIG. 2 — shows a top-view of the machine of FIG. 1.

FIG. 3 — shows in detail a vertical section of a portion of the machine of the invention.

FIG. 4 — shows a general schematic assembly of a known machine, in a state of deformation during the vulcanizing cycle.

FIG. 5 — shows a general schematic assembly of the machine according to the invention; in a state of deformation during the vulcanizing cycle.

FIG. 6 — shows a perspective view of a first form of realization of the device according to the invention.

FIG. 7 — shows a perspective view of a second form of realization of the device according to the invention.

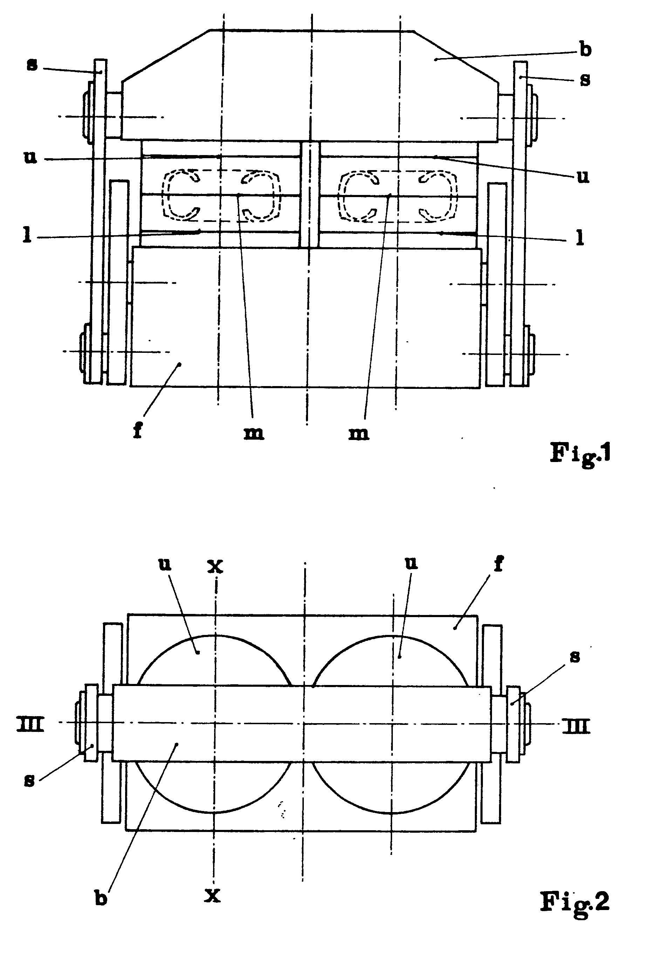

Therefore, FIG. 1 — shows a view of the assembly of the machine according to the invention, whose already described architecture, can be summarized thus: a base f on which are arranged, side-by-side to each other, two moulds m, schematically comprised by a lower portion l or bottom, fixed to the base, and by an upper portion u, or cap, fixed onto a beam b, connected to the base f through two shoulders s, in such a way as to realize between beam and base, a kinematic connection of the connecting-rod-handle type, that allows for opening and shutting the moulds and also for exercising on the covers of said moulds, a thrust directed towards the base, that is apt for keeping said moulds shut against the action of the vulcanizing-fluid pressure, or of the moulding-pressure of the material, that is exercised inside the moulds.

FIG. 2 shows the machine — as seen from above — and on the basis of the indications given in said figures, no further explanations are necessary.

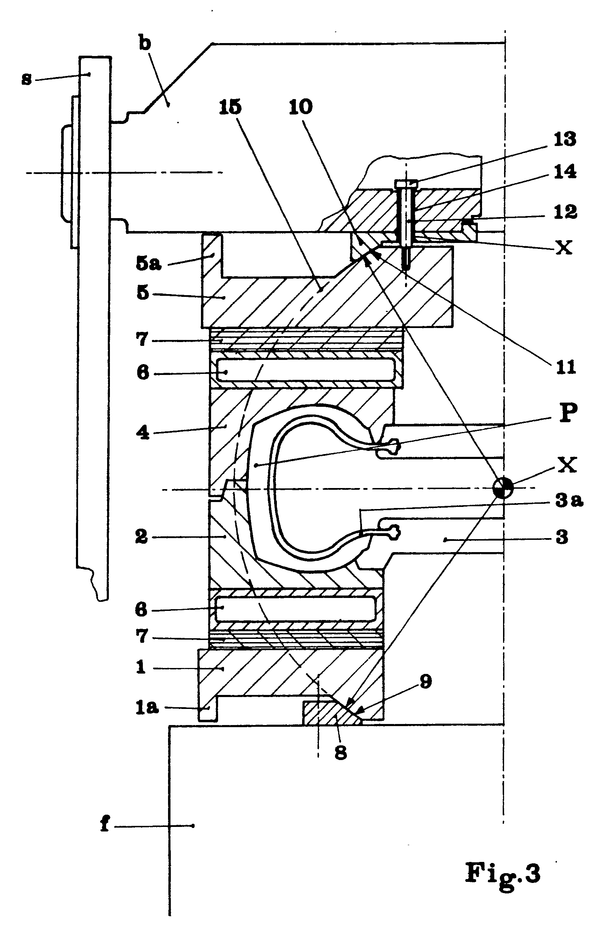

Passing on now to FIG. 3, this shows in detail, the architecture of the machine limited to a quarter of its lay-out — i.e. to the axial mid-plane of a single moulding place: clearly the rest of the machine portion can be reconstructed by means of symmetry with respect to the portion shown.

Hence, the machine comprises the base f connected through the shoulders s and a beam b, in such a way as to render said beam mobile-with respect to the base. The details of the kinematic-ism and of the various actionings have not been described or illustrated here — since they are already well known to technicians and do not form part of the present invention.

On the base f there is arranged a table 1, on which there is mounted the lower section 2 of the vulcanizing mould. The mould shown and described, is a two half-shells mould for vulcanizing tyres: it will appear clear from the description given herebelow, that the mould can be of any whatsoever type — for manufacturing any whatsoever moulded or injected article; whereas, just for the sake of convenience and clarity of description, there has been chosen the example of the mould for vulcanizing tyres.

In particular, as far as concern tyres, the mould could also be the already well-known mould of the centripetal type — comprised by two cheeks corresponding to the tyre sidewalls and by a circle of sectors that are radially shiftable with respect to the said cheeks, corresponding to the tread-band.

In the case illustrated, it can be noted that the central part of the mould is occupied by the actioning mechanism 3 of a vulcanizing chamber 3a, that is inserted into the raw tyre p prior to its vulcanization — and into which, during the moulding and vulcanizing cycle, a vulcanizing-fluid of a high temperature and pressure, is introduced.

The upper section 4 of the mould is fixed on a corresponding table 5 that, in its turn, is fixed to the beam b.

The above-said table, supporting the heating elements 6, inside which the fluid (steam) is made to circulate at a high temperature — for keeping the mould temperature to within prescribed limits — i.e. the elements 2 and 4 that, in being coupled with each other, define the cavity inside which the article to be produced is moulded and vulcanized.

According to the invention, the two vulcanizing moulds — and hence, also the said tables on which the corresponding sections of the mould are fixed, in an integral manner, through the interpositioning of opportune heat insulation elements 7 are made shiftable with respect to the press frame.

In particular, said shiftings are the rotations of the tables about an axis intersecting the mould axis perpendicular to the latter and to the plane of symmetry of the plane containing the mould axis and passing through the shoulders of the press.

The marking-out of said plane, is indicated with the line III-III in FIG. 2, and it is evident that said plane coincides with the plane of the drawing in FIG. 3.

For the purpose of obtaining the above-said shiftings of the tables on upon the base of the press, there are fixed — for each mould, two supporting elements 8, in particular two longitudinal-members, disposed perpendicularly to the plane of the drawing, provided with a concave surface 10, substantially oriented at 30° with respect to the axis of the mould. More precisely, the perpendicular to the chord of the circumference arc as originated by the intersection of each concave surface with the plane of symmetry III-III, is inclined at an angle (w) of 30° — with respect to the mould axis, which angle can however, vary from between 20° to 40°.

The lower table 1, rests upon this concave surface — through a convex surface that is coupled with the above-said concave surface.

Of course, fixing-means (not shown) can also be foreseen, that — though ensuring the possibility of relative shiftings between the table 1 and the base f, guarantee the assembly between table and base. Analogously to what has just been described on beam b, in correspondence of each mould, there are fixed two supporting-elements 10 — in particular, two longitudinal-members, disposed perpendicularly to the drawing plane, provided with a concave surface 11 — oriented approximatively at 30° with respect to the mould-axis, in an entirely similar way to what has just been defined above. The bending radius of said concave (convex) surfaces, has a value that — quite conveniently, is very similar to that of the tyre to be vulcanized.

The upper table couples with the above-said supports through two convex surfaces, coupled with the surfaces 11. Since table 5 is now freely shiftable, with respect to the beam, the fixture — between table and beam, that must allow for opening the mould through the actioning of the beam, is realized through a series of screws 12, provided with a blocking head 13 — and inserted into a hole 14 having a greater diameter that than of the body of screw 12. Said screws are connected to the beam by their upper extremity and fixed, in an integral way, to the table 5 by their other extremity. The head 13, in interfering with the beam body, prevents any detaching occurring — between the beam and the upper table.

Clearly speaking, the relative shiftings of the table with respect to the beam, cause an off-setting of said screw with respect to the beam; said off-setting being made possible by the above-cited greater width of the hole 14 with respect to the body of screw 12. For limiting the possible entity of these off-settings, the table 5 is conveniently provided with a tooth 5a that, after a rotation between table 5 and beam b, at a certain point interferes with the lower surface of said beam — with preventing any further rotation in the same direction. A similar tooth la, is provided on the table 1, for interfering with the base f.

Preferably, the concave and convex surfaces just described, are portions of coaxial cylindrical surfaces, whose generatrices — i.e. the lines parallel to the cylinder axis and lying on the surface of the cylinder itself, are parallel to the longitudinal direction of the longitudinal-members — i.e. perpendicular to the above-cited plane of symmetry III-III and hence, perpendicular to the drawing plane of FIG. 3.

Moreover and preferably, the above-said cylindrical surfaces — concave and convex, constitute portions of the same cylindrical surface, indicated with the broken-line 15 in FIG. 3, whose axis X-X lies on the equatorial plane of the mould, with cutting into the axis of the above-said mould.

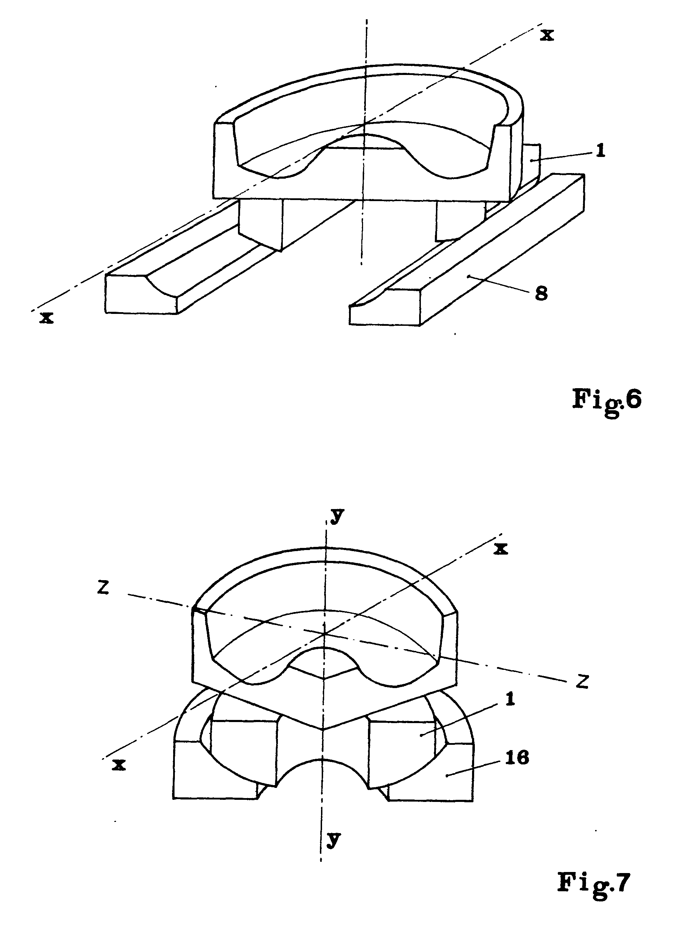

A perspective-view of the longitudinal-members just described, are seen in the whole assembly of FIG. 6. Obviously, in said form of embodiment for the invention, the only shifting permitted, between the lower portion of the mould and the supporting longitudinal-members, is a rotation about the axis X-X.

In a diverse variation of realization for the machine of the invention, the pair of supporting elements in correspondence of each table, is substituted by a single annular supporting element 16 that is coaxial with the axis of the mould wherein the above-said concave and cylindrical surface now becomes a concave portion of the spherical cap.

The above-said element which shall be called a drum, is indicated and shown in a perspective view in FIG. 7.

Correspondingly, also the convex, cylindrical surface, made on the tables, transforms into a convex surface constituted by a portion of the spherical cap coupled with the concave surface of the annular supporting element that is fixed on the frame. In this form of realization for the invention, rotations result possible (see FIG. 7) both, about the axis X-X and about the axis Y-Y, as well as about the axis Z-Z and with the fact always holding good of the meeting-point of the three axes being stationary with respect to the plane III-III.

The functioning of the device now results as being easy to comprehend.

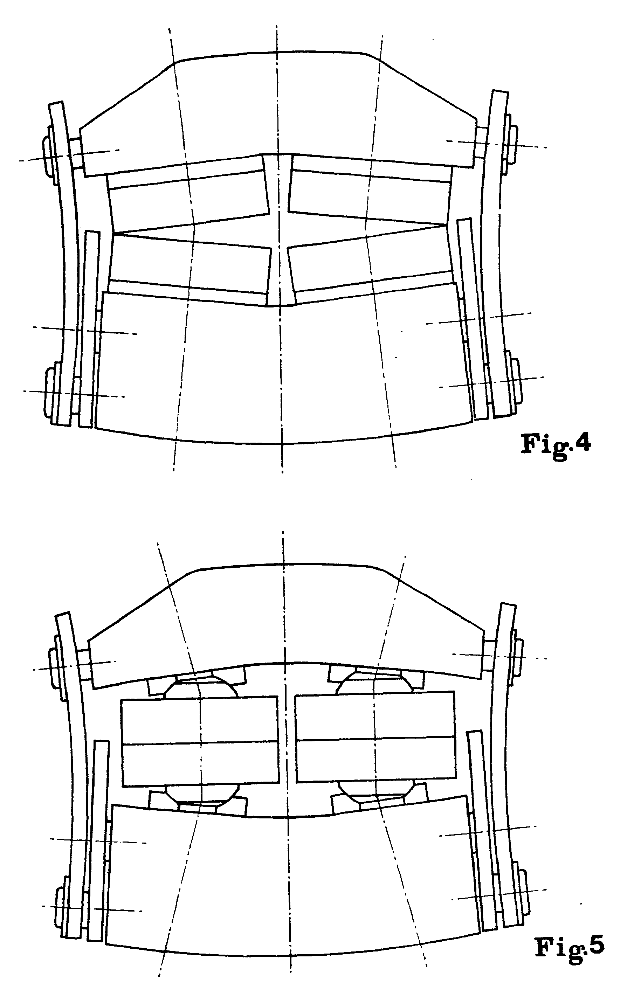

Under the combined effect of the thrusts — directed downwardly towards the base, exercised at the extremity of the beam, and the counter-thrusts exercised by the mould, in two intermediate points at the above-said extremities, the beam bends upwardly — with assuming a curve whose cavity is turned downwards, symmetrically with respect to the midplane of the press, orthogonal to the plane of symmetry III-III, and passing through the two moulds — as shown in FIGS. 4 and 5 in an obviously exaggerated way, for the scope of illustrating said phenomenon with the maximum of clarity.

Contrary to what took place in the known devices (FIG. 4) — where the tables were integrated respectively with the beam and with the base, in the invention press, the bending of the above-said beam is no longer able to determine any offsetting between the two half-moulds — lower and upper, of each mould, with having the consequent unbalanced distribution of the pressures along the edges of the mould, since the mould-tables complex, can move and — in particular, rotate with respect to the beam (FIG. 5) — and hence, automatically re-establish, through said rotation, the balance and the uniformity of the pressures along the contacting edge, between the upper and the lower sections of the mould; therefore, the mould results as having been charged with a pressure that is directed exclusively in the axial sense and hence, it remains centered and completely closed, with its also behaving in a manner that is quite similar to that of the moulds mounted on the single presses — i.e. those having a single moulding place.

What was affirmed at the beginning of the present description, will now result as being quite clear — i.e. in that the type of mould mounted on the press, has no influence at all as far as regards the technical problem that was faced and solved by the Applicant. On the other hand, it is necessary to point out here, that all the relative shiftings between moulds and frame, are extremely limited shiftings — with at most involving millimeters — i.e. which are such as can be checked and controlled by adequately choosing the value of the clearances — in the connecting means between the mutually shiftable parts.

To end with, it is obvious that the present description has been given solely by way of non-limiting example and that what is also included within the field of protection of the present claims are all those modifications and variations — even though not expressly described, which are nevertheless easily deducible from the present inventive idea, for the one skilled in the art.

## Claims

1. Moulding and/or vulcanizing press that is provided with two adjacent side by side disposed places for containing two corresponding vulcanizing moulds, each mould comprising at least two opposite sections (2, 4), a lower and an upper section respectively, that are reciprocally shiftable axially in both directions with delimiting a cavity inside which the product is moulded and vulcanized, with each section being mounted on a corresponding table (1, 5), said press being constituted substantially by a frame comprising a base (f), provided with two adjacent, side by side placed housing seats for the lower tables (1), a beam (b) on which are mounted the upper tables (5), two shoulders (s) connecting said beam to said base through fixtures that allow for shifting said beam with respect to said base for so realizing at least the opening and the shutting of the moulds and for exercising a thrust, upon each pair of opposed sections, that is sufficient for keeping the said moulds shut by contrasting the pressure acting inside said moulds during each working cycle, said press being characterized by the fact of comprising means (8, 10), for coupling with said moulds, that are made integral with said beam and said base and interposed respectively between said beam and said upper table and between said base and said lower table, provided with coupling surfaces (9, 11) with corresponding matching surfaces made on said tables, apt for allowing, for each mould, relative shiftings between said closed and pressurized mould and said frame.

2. Press, according to Claim 1, characterized by the fact that said relative shiftings comprise at least the rotation of each table with respect to the frame, about an axis (x) perpendicular to the axis of said mould and to the plane of symmetry passing through said shoulders.

3. Press, according to Claim 1, characterized by the fact that said coupling surfaces are concave surfaces whose intersections with the said plane of symmetry are arcs of a circle (15) having the perpendicular to the chord inclined with respect to the mould axis according to an angle of from 20° to 40°.

4. Press, according to Claim 1, characterized by the fact that said supporting means comprise, in correspondence of each table, a pair of longitudinal-members (8, 10) mounted integrally with respect to said beam and said base, perpendicular to said plane of symmetry, symmetrically disposed with respect to the axis of said mould, provided with a concave coupling surface for coupling with a corresponding convex surface made on said table.

5. Press, according to Claim 4, characterized by the fact that said concave surface is a cylindrical surface having its generatrix parallel to the longitudinal direction of said longitudinal-member.

6. Press, according to Claim 5, characterized by the fact that said cylindrical surfaces comprise surface portions of coaxial cylinders.

7. Press, according to Claim 6, characterized by the fact that said cylindrical surfaces consist of four surface portions of the same cylinder.

8. Press, according to Claim 1, characterized by the fact that said supporting means comprise, for each table, a drum (16) coaxial with the corresponding annular section and provided with a concave surface comprising the inner surface of a spherical cap that couples with a corresponding convex spherical cap made on said table.

## Patentansprüche

1. Form- und/oder Vulkanisierpresse, die mit zwei benachbarten Seite an Seite angeordneten Stellen versehen ist zum Aufnehmen zweier entsprechender Vulkanisierformen, wobei jede Form wenigstens zwei gegenüberlegende Abschnitte (2, 4) aufweist, einen unteren bzw. einen oberen Abschnitt, die axial in beiden Richtungen hin- und herverschiebbar sind, wobei sie einen Hohlraum begrenzen, in dessen Innerem das Erzeugnis geformt und vulkanisiert wird, wobei jeder Abschnitt an einem entsprechenden Tisch (1, 5) angebracht ist, die Presse im wesentlichen durch ein Gestell dargestellt ist, das eine Basis (f), die mit zwei benachbarten, Seite an Seite angeordneten Gehäusesitzen für die unteren Tische (1) versehen ist, einen Träger (b), an welchem die oberen Tische (5) angebracht sind, und zwei Schultern (s) umfaßt, welche den Träger mit der Basis über Befestigungseinrichtungen verbinden, die ein Verschieben des Trägers mit Bezug auf die Basis ermöglichen, um auf diese Weise wenigstens das Öffnen und das Schließen der Formen auszuführen und eine Schubkraft auf jedes Paar von gegenüberliegenden Abschnitten auszuüben, die ausreichend ist, die Formen geschlossen zu halten, indem dem Druck, der in den Formen während jedes Arbeitskreislaufes wirkt, entgegengewirkt wird,

dadurch gekennzeichnet, daß Mittel (8, 10) vorgesehen sind zum Koppeln mit den Formen, wobei die Mittel mit dem Träger und der Basis einheitlich ausgebildet und jeweils zwischen dem Träger und dem oberen Tisch und zwischen der Basis und dem unteren Tisch angeordnet und mit Kopplungsflächen (9, 11) versehen sind, wobei entsprechende Paßflächen an den Tischen gebildet sind, so daß für jede Form relative Verschiebungen zwischen der geschlossenen und unter Druck gesetzten Form und dem Gestell ermöglicht sind.

2. Presse nach Anspruch 1, dadurch gekennzeichnet, daß die relativen Verschiebungen wenigstens die Drehung jedes Tisches mit Bezug auf das Gestell um eine Achse (x) rechtwinkelig zur Achse der Form und zu der durch die Schultern hindurchgehenden Symmetrieebene umfassen.

3. Presse nach Anspruch 1, dadurch gekennzeichnet, daß die Kopplungsflächen konkave Flächen sind, deren Schnittstellen mit der genannten Symmetrieebene Kreisbogen (15) sind, deren Senkrechte zu der Sehne mit Bezug auf die Formachse in einem Winkel von 20° bis 40° schräg verläuft.

4. Presse nach Anspruch 1, dadurch gekennzeichnet, daß die Abstützmittel für jeden Tisch ein Paar von Längsteilen (8, 10) umfassen, die mit Bezug auf den Träger und die Basis einheitlich angebracht sind rechtwinklig zu der Symmetrieebene und symmetrisch mit Bezug auf die Achse der Form sowie mit einer konkaven Kopplungsfläche versehen sind für Kopplung mit einer entsprechenden konvexen Fläche an dem Tisch.

5. Presse nach Anspruch 4, dadurch gekennzeichnet, daß die konkave Fläche eine zylindrische Fläche ist, deren Erzeugende parallel zur Längsrichtung des Längsteiles verläuft.

6. Presse nach Anspruch 5, dadurch gekennzeichnet, daß die zylindrischen Flächen Flächenteile von koaxialen Zylindern umfassen.

7. Presse nach Anspruch 6, dadurch gekennzeichnet, daß die zylindrischen Flächen aus vier Flächenteilen des gleichen Zylinders bestehen.

8. Presse nach Anspruch 1, dadurch gekennzeichnet, daß die Tragmittel für jeden Tisch eine Trommel (16) umfassen, die zu dem entsprechenden ringförmigen Abschnitt gleichachsig verläuft und mit einer konkaven Fläche versehen ist, welche die innere Fläche einer sphärischen Kappe umfaßt, die mit einer entsprechenden konvexen sphärischen Kappe an dem Tisch gekoppelt ist.

## Revendications

1. Presse de moulage et/ou de vulcanisation qui comporte deux emplacements adjacents, disposés côte-à-côte, pour contenir deux moules de vulcanisation correspondant, chaque moule comprenant au moins deux sections opposées (2, 4), une section supérieure et une section inférieure respectivement, qui peuvent être décalées en va-et-vient axialement dans les deux sens en délimitant une cavité à l'intérieur de laquelle le produit est moulé et vulcanise, chaque section étant montée sur une table correspondante (1, 5), ladite presse étant constituée sensiblement par un cadre comprenant une base (f), comportant deux sièges de logement adjacents, placés côte-à-côte pour les tables inférieures (1), une poutre (b) sur laquelle sont montées les tables supérieures (5), deux épaulements (s) reliant ladite poutre à ladite base à l'aide de dispositifs de serrage qui permettent de décaler ladite poutre par rapport à ladite base afin de réaliser ainsi au moins l'ouverture et la fermeture des moules et pour exercer une poussée, sur chaque paire de sections opposées, qui est suffisante pour garder fermés lesdits moules en s'opposant à la pression agissant à l'intérieur desdits moules pendant chaque cycle de travail, ladite presse étant caractérisée par le fait qu'elle comprend des moyens (8, 10) d'accouplement avec lesdits moules, qui sont réalisés d'un seul tenant avec ladite poutre et ladite base et interposés respectivement entre ladite poutre et ladite table supérieure, et entre ladite base et ladite table inférieure, comportant des surfaces d'accouplement (9, 11) avec des surfaces correspondantes d'appariement réalisées sur lesdites tables, aptes à permettre, pour chaque moule, des décalages relatifs entre ledit moule fermé et pressurisé et ledit cadre.

2. Presse selon la revendication 1, caractérisée par le fait que lesdits décalages relatifs comprennant au moins la rotation de chaque table par rapport au cadre, autour d'un axe (x) perpendiculaire à l'axe dudit moule et au plan de symétrie passant par lesdits épaulements.

3. Presse selon la revendication 1, caractérisée par le fait que lesdites surfaces d'accouplement sont des surfaces concaves dont les intersections avec ledit plan de symétrie sont des arcs d'un cercle (15) dont la perpendiculaire à la corde est inclinée par rapport à l'axe du moule selon un angle de 20° à 40°.

4. Presse selon la revendication 1, caractérisée par le fait que lesdits moyens de support comprennent, en correspondance avec chaque table, une paire d'organes longitudinaux (8, 10) montés d'un seul tenant par rapport à ladite poutre et à ladite base, perpendiculairement audit plan de symétrie, disposés symétriquement par rapport à l'axe dudit moule, comportant une surface d'accouplement concave en vue d'un accouplement avec une surface convexe correspondante réalisée sur ladite table.

5. Presse selon la revendication 4, caractérisée par le fait que ladite surface concave est une surface cylindrique dont la génératrice est parallèle à la direction longitudinale dudit organe longitudinal.

6. Presse selon la revendication 5, caractérisée par le fait que lesdites surfaces cylindriques comprennent des parties de surfaces de cylindres coaxiaux.

7. Presse selon la revendication 6, caractérisée par le fait que lesdites surfaces cylindriques consistent en quatre parties de surface du même cylindre.

8. Presse selon la revendication 1, caractérisée par le fait que lesdits moyens de support comprennent, pour chaque table, un tambour (16) coaxial à la section annulaire correspondante et comportant une surface concave comprenant la surface intèrieure d'une calotte sphérique qui s'accouple avec une calotte sphérique concave correspondante réalisée sur ladite table.

**Fig.1**

**Fig.2**

**Fig.3**

Fig.4

Fig.5

Fig.6

Fig.7